Europäisches Patentamt

European Patent Office

Office européen des brevets

(11) Numéro de publication: **0 394 158**

**A1**

## (12) DEMANDE DE BREVET EUROPEEN

(21) Numéro de dépôt: 90470015.0

(22) Date de dépôt: 05.04.90

(51) Int. Cl.5: **G01N 27/72, G01N 27/80**

(30) Priorité: **18.04.89 FR 8905148**

(43) Date de publication de la demande:
**24.10.90 Bulletin 90/43**

(84) Etats contractants désignés:
**AT BE CH DE DK ES GB GR IT LI LU NL SE**

(71) Demandeur: **INSTITUT DE RECHERCHES DE LA SIDERURGIE FRANCAISE (IRSID)**
**Immeuble Elysées-la-Défense 19, Le Parvis**
**La Défense 4**
**F-92800 Puteaux(FR)**

(72) Inventeur: **Mayos, Michel**
**4, Mail des Coquelicots**
**F-94240 L'Hay les Roses(FR)**

(74) Mandataire: **Ventavoli, Roger et al**
**TECHMETAL PROMOTION Domaine de l'IRSID Voie romaine BP 321**
**F-57213 Maizières-lès-Metz Cédex(FR)**

(54) **Procédé et dispositif de contrôle non destructif de matériau magnétique présentant un gradient de structure dans sa partie superficielle.**

(57) Le contrôle utilise la technique de la perméabilité incrémentale. Des courants de Foucault sont engendrés dans le produit à contrôler (10) tout en faisant varier périodiquement l'intensité d'un champ magnétique extérieur appliqué au produit pour élaborer la fonction de perméabilité incrémentale traduisant la relation entre un signal représentant les courants de Foucault détectés et l'intensité du champ magnétique. Les valeurs de l'intensité du champ magnétique (I) correspondant à un extremum de la dérivée de la fonction de perméabilité incrémentale sont déterminées pour au moins deux fréquences différentes des courants de Foucault :

- au moins une première fréquence choisie entre une fréquence haute ($f_H$) pour que les courants de Foucault soient essentiellement localisés à proximité de la surface du produit, dans une zone où le produit présente normalement une première structure, et une fréquence basse ($f_B$) pour que les courants de Foucault atteignent une zone relativement profonde où le produit présente normalement une deuxième structure différente de la première, et

- une deuxième fréquence, ou fréquence critique ($f_C$), prédéterminée en fonction d'une valeur critique choisie de la profondeur de transition entre la première et la deuxième structure. Une information qualitative relative au produit contrôlé est émise en fonction de la valeur d'intensité déterminée pour la fréquence critique par rapport à la ou chaque valeur d'intensité déterminée pour au moins l'une des fréquences haute et basse.

L'invention est applicable au contrôle de la décarburation de produits en acier.

Fig-5

# Procédé et dispositif de contrôle non destructif de matériau magnétique présentant un gradient de structure dans sa partie superficielle.

La présente invention concerne le contrôle de matériau magnétique présentant un gradient de structure dans sa partie superficielle, c'est-à-dire ayant dans sa partie adjacente à la surface une structure différente de celle qu'il présente à coeur. L'invention vise notamment le contrôle non destructif de matériaux magnétiques, tels que les aciers, ayant subi un traitement de surface visant à accroître sa dureté superficielle. Un domaine particulier d'application de l'invention est le contrôle de la décarburation superficielle de produits en acier, tels que, notamment, des billettes destinées à faire du fil d'acier ou des laminés en acier pour ressorts.

Actuellement, le contrôle de décarburation superficielle des aciers est effectué industriellement de façon destructive, par prise d'échantillons et examen micrographique ou analyse chimique. Une mesure assez précise de la profondeur de décarburation en surface peut ainsi être effectuée. Toutefois, cette façon de procéder présente des inconvénients propres au contrôle destructif, à savoir le sacrifice d'une partie du produit, une durée de mesure relativement longue, un temps de réaction important, et l'absence de certitude sur la représentativité de l'échantillon pris.

Pour éviter ces inconvénients, il a été envisagé de faire appel à des techniques de type électromagnétique pour effectuer un contrôle non destructif de la décarburation superficielle d'un acier, techniques utilisant le bruit Barkhausen ou la perméabilité incrémentale.

La présente invention a pour but de fournir un procédé de contrôle non destructif utilisant la technique de la perméabilité incrémentale et applicable non seulement au contrôle de la décarburation superficielle des aciers, mais aussi au contrôle de tout produit en matériau magnétique présentant un gradient de structure dans sa partie superficielle.

Plus particulièrement, la présente invention a pour but de fournir un procédé qui permette l'obtention d'une information qualitative relative à un produit contrôlé, c'est-à-dire une information telle que produit "bon", produit "mauvais" ou produit "douteux" par référence à un état superficiel admissible, compte-tenu par exemple de la nature ou de l'utilisation ultérieure du produit.

Ce but est atteint au moyen d'un procédé de contrôle du type selon lequel :
- des courants de Foucault sont engendrés dans le produit à contrôler tout en faisant varier périodiquement l'intensité d'un champ magnétique extérieur appliqué au produit à contrôler, la fréquence de variation de l'intensité du champ magnétique étant petite par rapport à la fréquence des courants de Foucault, et
- la valeur de l'intensité du champ magnétique correspondant sensiblement à un extremum de la dérivée de la fonction de perméabilité incrémentale par rapport au champ magnétique, ou une grandeur équivalente, est déterminée,
- la fonction de perméabilité incrémentale traduisant la relation entre un signal fourni par des moyens de détection des courants de Foucault, ou une grandeur équivalente à ce signal, et l'intensité du champ magnétique, ou une grandeur équivalente à cette intensité, et
- l'extremum de la dérivée par rapport au champ magnétique de la fonction de perméabilité incrémentale étant le minimum de cette dérivée pour la partie de la fonction dont la courbe représentative est décrite pour les valeurs croissantes de l'intensité du champ magnétique, ou le maximum de cette dérivée pour la partie de la fonction dont la courbe représentative est décrite pour les valeurs décroissantes de l'intensité du champ magnétique, procédé selon lequel, conformément à l'invention :

(a) les valeurs ($I_{OH}$, $I_{OB}$, $I_{OC}$) de l'intensité du champ magnétique, ou d'une grandeur équivalente, correspondant audit extremum de la dérivée de la fonction de perméabilité incrémentale, sont déterminées pour au moins deux fréquences différentes des courants de Foucault engendrés dans le produit :
- au moins l'une des deux fréquences constituées par une fréquence ($f_H$) relativement haute pour que les courants de Foucault soient essentiellement localisées à proximité de la surface du produit dans une zone où le produit présente normalement une première structure, et une fréquence ($f_B$) relativement basse pour que les courants de Foucault atteignent une zone relativement profonde où le produit présente normalement une deuxième structure différente de la première, et
- une deuxième fréquence, ou fréquence critique ($f_C$), prédéterminée en fonction d'une valeur critique choisie de la profondeur de transition entre la première et la deuxième structure ; et

(b) au moins une information qualitative relative au produit contrôlé est émise en fonction de la valeur d'intensité ($I_{OC}$) déterminée pour la fréquence critique par rapport à la ou chaque valeur d'intensité ($I_{OH}$, $I_{OB}$) déterminée pour au moins l'une des fréquences haute et basse.

Ainsi, selon que l'exploration à la fréquence critique correspondant à la profondeur critique de transition choisie donne un résultat proche ou non de celui de l'exploration à la fréquence haute ou à la fréquence basse, le produit sera qualifié de bon ou mauvais, ou inversement, selon la caractéristique recherchée.

Selon une particularité du procédé, des valeurs ($I_{OH}$, $I_{OB}$) de l'intensité du champ magnétique, ou d'une grandeur équivalente, correspondant à l'extremum de la dérivée de la fonction de perméabilité incrémentale sont déterminées pour la fréquence haute et pour la fréquence basse , et une informaiton qualitative relative au produit contrôlé est émise en fonction de la position de la valeur d'intensité ($I_{OC}$) déterminée pour la fréquence critique dans l'intervalle délimité par les valeurs d'intensité ($I_{OH}$, $I_{OB}$) déterminées pour les fréquences haute et basse.

Dans ce dernier cas, en considérant par exemple le contrôle de la décarburation superficielle d'un produit en acier, lorsque la valeur d'intensité ($I_{OC}$) déterminée pour la fréquence critique est proche de la valeur d'intensité ($I_{OB}$) déterminée pour la fréquence basse, le produit peut être qualifié de bon, puisque l'exploration à la fréquence correspondant à la profondeur critique donne un résultat proche de l'exploration à une profondeur située normalement au-delà de la couche superficielle décarburée.

Inversement, lorsque la valeur d'intensité ($I_{OC}$) déterminée pour la fréquence critique est proche de la valeur d'intensité ($I_{OH}$) déterminée pour la fréquence haute, le produit peut être qualifié de mauvais puisque l'exploration à la fréquence correspondant à la profondeur critique donne un résultat proche de l'exploration dans une zone normalement décarburée.

Enfin, lorsque la valeur d'intensité ($I_{OC}$) déterminée pour la fréquence critique n'est ni proche de la valeur d'intensité ($I_{OB}$) déterminée pour la fréquence basse, ni proche de la valeur d'intensité ($I_{OH}$) déterminée pour la fréquence haute, le produit peut être qualifié de douteux. Le produit est alors éventuellement soumis à un contrôle destructif afin d'évaluer plus précisément la profondeur de décarburation en vue de décider de l'utilisation future du produit.

Un autre but de la présente invention est de fournir un dispositif permettant de mettre en oeuvre le procédé défini ci-dessus.

L'invention sera mieux comprise à la lecture de la description faite ci-après, à titre indicatif mais non limitatif, en référence aux dessins annexés, sur lesquels :

- la figure 1 illustre schématiquement, pour un acier homogène, la courbe représentative de la fonction de perméabilité incrémentale traduisant la variation de la tension aux bornes d'une bobine de détection de courants de Foucault engendrés dans un produit en acier en fonction de l'intensité d'un champ magnétique variable périodiquement appliqué au produit en acier,

- la figure 2 montre une courbe représentative de la dérivée de la fonction de perméabilité incrémentale de la figure 1,

- la figure 3 montre une courbe qui représente la variation de l'intensité du champ magnétique correspondant à un extremum de la dérivée de la figure 2 en fonction de la fréquence des courants de Foucault,

- la figure 4 montre la corrélation entre la profondeur de décarburation et la fréquence des courants de Foucault pour laquelle se produit la transition entre les valeurs d'intensité du champ magnétique correspondant à un extremum de la dérivée de la fonction de perméabilité incrémentale respectivement pour une structure de type perlite et une structure de type ferrite,

- la figure 5 illustre schématiquement un dispositif de contrôle conforme à l'invention, et

- la figure 6 est un organigramme montrant les opérations effectuées au moyen de l'unité de traitement du dispositif de la figure 5.

Un mode particulier de mise en oeuvre de l'invention sera maintenant décrit dans le cadre de son application au contrôle de la décarburation superficielle des aciers.

Pour certains produits en acier tels que des billettes destinées à faire du fil d'acier ou des laminés en acier pour ressorts, un contrôle de la décarburation superficielle de l'acier est nécessaire pour s'assurer de l'aptitude de celui-ci à l'utilisation envisagée.

Ce contrôle ne requiert en fait pas une mesure précise de la profondeur de décarburation dans la partie superficielle de l'acier, mais la vérification que cette profondeur n'est pas trop grande.

Aussi, l'objet de l'invention est de fournir un procédé et un dispositif qui permettent de disposer d'une information qualitative relative à l'aptitude du produit à l'utilisation envisagée, et non d'une information quantitative relative à la profondeur de décarburation superficielle. A cet effet, conformément à l'invention, il est fait appel à une technique de type électromagnétique autorisant un contrôle non destructif, plus particulièrement à une technique utilisant la perméabilité incrémentale.

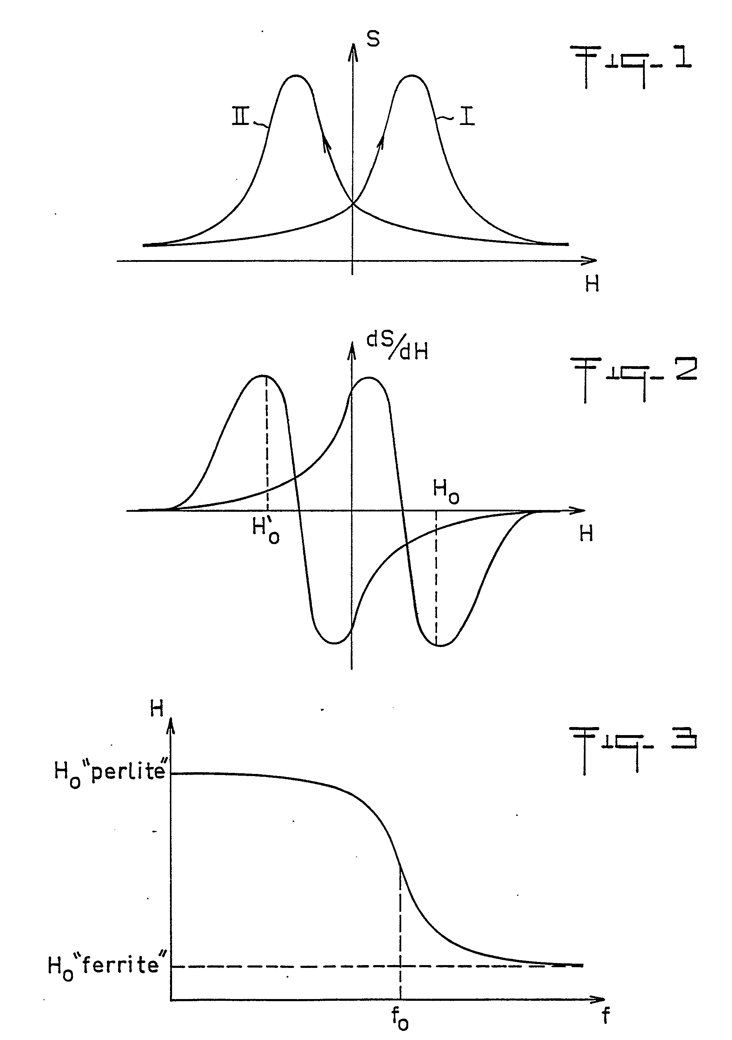

Une courbe représentative d'une fonction de perméabilité incrémentale pour un acier homogène est représentée sur la figure 1. Cette courbe est obtenue de la façon suivante.

Une bobine émettrice placée à proximité de la surface de l'acier est excitée par un signal électrique de fréquence f pour engendrer des courants de Foucault dans l'acier, tandis qu'un champ magnétique extérieur dont l'intensité varie périodiquement est appliqué à l'acier dans la zone où les courants de Foucault sont engendrés.

La fréquence F de variation de l'intensité du champ magnétique est petite par rapport à la fréquence f des courants de Foucault. Le rapport entre f et F est de préférence au moins égal à 100.

La valeur absolue maximale de l'intensité du champ magnétique est choisie suffisamment grande pour dépasser de façon significative le champ coercitif, voire atteindre la saturation magnétique de l'acier, de sorte que le cycle d'hystérésis complet est décrit au cours de chaque période du champ magnétique.

Un détecteur de courants de Foucault, tel qu'une bobine détectrice, est placé à proximité de la surface de l'acier pour fournir un signal de détection des courants de Foucault circulant dans celui-ci. Ce signal est par exemple la tension $S$ recueillie aux bornes de la bobine détectrice ; il pourrait s'agir d'une grandeur équivalente, telle que le module de l'impédance de la bobine détectrice.

La courbe de perméabilité incrémentale illustre la variation de la tension $S$ (portée en ordonnée), ou d'une grandeur équivalente à cette tension, en fonction de l'intensité $H$ du champ magnétique (portée en abscisse), ou d'une grandeur équivalente à cette intensité du champ magnétique, par exemple l'intensité du courant d'excitation d'un électroaimant créant le champ magnétique.

Comme le montre la figure 1, la courbe représentant la variation de $S$ en fonction de $H$ comprend deux parties symétriques l'une de l'autre par rapport à l'axe des ordonnées : une première partie I décrite pour les valeurs de $H$ croissantes (trajet aller du cycle d'hystéréris) et une deuxième partie II décrite pour les valeurs de $H$ décroissantes (trajet retour du cycle d'hystéréris).

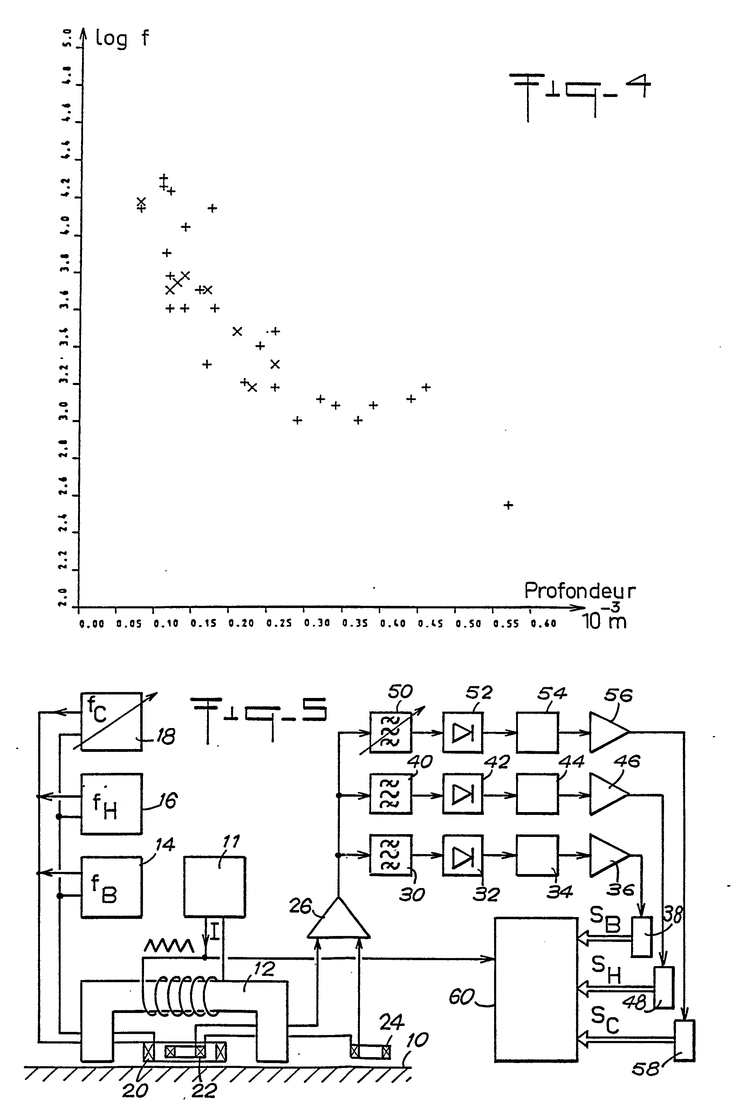

L'on s'intéresse ici à la dérivée $dS/dH$ de la fonction de perméabilité incrémentale, dérivée dont la courbe représentative est montrée sur la figure 2, et plus particulièrement à la valeur de $H$ pour laquelle la dérivée passe par un extremum, à savoir :
- soit la valeur $H_O$ pour laquelle la dérivée passe par un minimum pour la partie de la fonction de perméabilité incrémentale représentée par la partie de courbe I de la figure 1,
- soit la valeur $H'_O$ (théoriquement opposée à $H_O$) pour laquelle la dérivée passe par un maximum pour la partie de la fonction de perméabilité incrémentale représentée par la partie de courbe II de la figure 1.

On considérera ci-après la valeur $H_O$. Pour un échantillon homogène, il s'avère que $H_O$ est corrélée à la dureté mécanique. C'est ainsi que la valeur de $H_O$ pour la ferrite est inférieure à la valeur de $H_O$ pour la perlite. Par conséquent, pour un acier partiellement décarburé, la valeur de $H_O$ dépend de la quantité de ferrite ou de perlite contenue dans la zone explorée. Dans le texte qui va suivre et par commodité de language, on appellera la structure à coeur "perlite" et la structure en peau "ferrite", tout en sachant que cette "perlite" contient toujours une certaine fraction de ferrite et que la "ferrite superficielle" renferme généralement un infime pourcentage de "perlite".

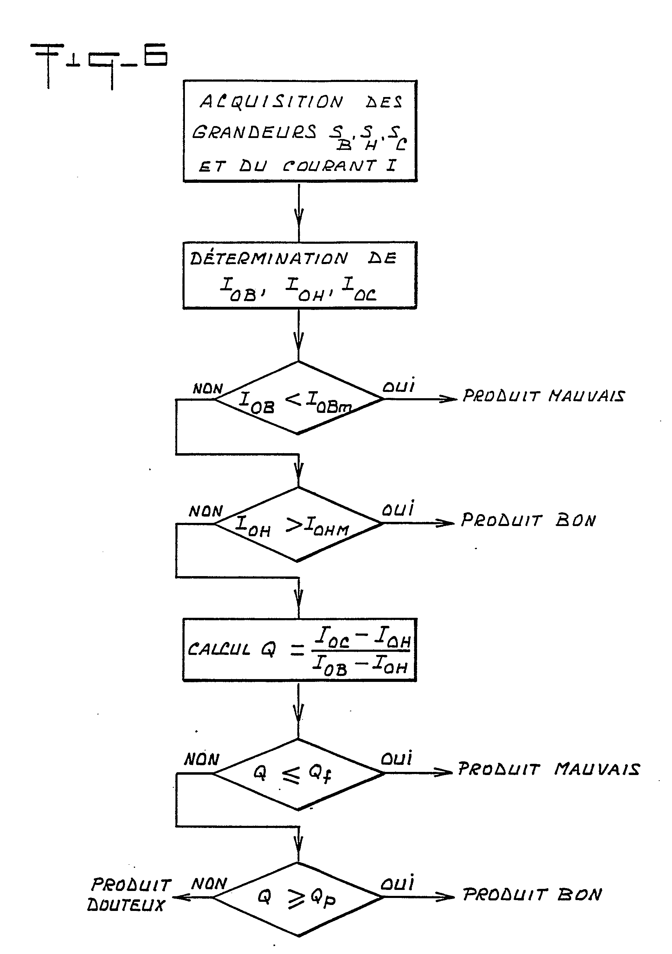

Or, en raison de l'effet de peau commun à tous les phénomènes électromagnétiques alternatifs, la profondeur explorée est liée à la fréquence f des courants de Foucault. Plus la fréquence f est élevée et plus la profondeur explorée est faible. Ainsi, pour un acier présentant une décarburation superficielle, la valeur de $H_O$ varie en fonction de f comme illustré par la figure 3. Lorsque la fréquence f est relativement basse, la zone explorée s'étend normalement jusqu'au-delà de la profondeur de décarburation, la perlite est dominante et la valeur de $H_O$ est relativement élevée. Lorsque la fréquence f est relativement haute, la zone explorée est localisée à proximité de la surface dans une région normalement décarburée, la ferrite est dominante et la valeur de $H_O$ est relativement basse.

La transition entre la valeur de $H_O$ "perlite" et la valeur de $H_O$ "ferrite" est plus ou moins brusque selon le gradient de structure, mais la fréquence de transition $f_O$ pour laquelle la valeur de $H_O$ est égale à la moyenne arithmétique $H_{OM}$ entre $H_O$ "perlite" et $H_O$ "ferrite", est représentative de l'épaisseur décarburée et,ce, indépendamment de la nuance de l'acier. Il y a donc une corrélation entre la fréquence de transition $f_O$ et la profondeur décarburée. La figure 4 montre cette corrélation pour divers échantillons de laminés en acier pour ressorts.

L'utilisation de la valeur $H_{OM}$ pour évaluer la profondeur décarburée suppose que la courbe de la figure 3 puisse être tracée, donc que les valeurs de $H_O$ soient déterminées pour toute la plage de fréquences des courants de Foucault entre la fréquence basse (exploration d'une zone normalement non décarburée) et la fréquence haute (exploration d'une zone normalement décarburée). Cette procédure est difficilement applicable industriellement en raison du temps nécessaire. En effet, pour chaque fréquence des courants de Foucault, le temps de mesure est au moins égal à la période du champ magnétique. Or, compte tenu de la fréquence des courants de Foucault nécessaires pour explorer les profondeurs désirées, et de la nécessité d'un rapport relativement grand entre la fréquence des courants de Foucault et celle du champ magnétique, la période de celui-ci est de plusieurs secondes.

Aussi, la présente invention propose d'effectuer une exploration à une fréquence $f_c$ correspondant à une profondeur de décarburation critique $P_c$ prédéterminée. Si la valeur $H_{OC}$ de $H_O$ obtenue est plutôt proche de $H_O$ "perlite", plutôt proche de $H_O$ "ferrite" ou intermédiaire, le produit contrôlé peut être alors qualifié respectivement de bon, mauvais ou douteux.

La fréquence critique $f_C$ est choisie après des essais préliminaires ayant permis d'établir la corrélation entre fréquence de transition et profondeur décarburée.

L'expérience a montré que, contrairement à la fréquence de transition, les valeurs de $H_O$ "perlite" et $H_O$ "ferrite" dépendent fortement de la dureté du matériau et présentent une forte dispersion, surtout pour la perlite.

C'est pourquoi, conformément à l'invention, l'exploration à fréquence critique $f_C$ est complétée par un essai à fréquence basse $f_B$ qui donne une valeur $H_{OB}$ assimilée à $H_O$ "perlite" et un essai à fréquence haute $f_H$ qui donne une valeur $H_{OH}$ assimilée à la référence "ferrite". Il est alors possible de définir un paramètre

$$Q = \frac{H_{OC} - H_O \text{ "ferrite"}}{H_O \text{ "perlite"} - H_O \text{ "ferrite"}}$$

Le paramètre $Q$ est compris entre 0 et 1. Deux valeurs de seuil $Q_f$ et $Q_p$ sont choisies, telles que $0 < Q_f < Q_p < 1$. Si $Q \geq Q_p$, le produit contrôlé est qualifié de bon. Si $Q \leq Q_f$, le produit contrôlé est qualifié de mauvais. Si $Q_f < Q < Q_p$, le produit est qualifié de douteux. Dans ce dernier cas, un contrôle destructif peut être effectué avant de statuer sur l'utilisation définitive du produit.

Il peut se produire que l'assimilation $H_{OB} = H_O$ "perlite" ne soit pas exacte, dans le cas d'une décarburation très profonde. Pour éliminer ce cas, qui fausserait le contrôle, la valeur $H_{OB}$ déterminée est comparée à une valeur de référence préétablie $H_{OBm}$ correspondant à une valeur minimale de $H_O$ "perlite". Si $H_{OB} < H_{OBm}$, ce qui traduit une décarburation profonde, le produit est qualifié de mauvais.

De même, il peut se produire que l'assimilation $H_{OH} = H_O$ "ferrite" ne soit pas valable, dans le cas où le produit contrôlé ne présente pas de ferrite en surface (pas de décarburation ou décarburation partielle). Pour éliminer ce cas, la valeur $H_{OH}$ déterminée est comparée à une valeur de référence préétablie $H_{OHM}$ correspondant à une valeur maximale de $H_O$ "ferrite". Si $H_{OH} > H_{OHM}$, le produit est qualifié de bon.

Après les tests préalables sur $H_{OB}$ et $H_{OH}$, le test sur la valeur de $Q$ peut être effectué. Les valeurs limites $Q_f$ et $Q_p$ sont par exemple choisies égales à 0,4 et 0,6.

La figure 5 illustre un mode de réalisation d'un dispositif de contrôle conforme à l'invention.

Un champ magnétique est engendré dans le produit à contrôler 10 au moyen d'un électroaimant 12 dont la bobine d'excitation est parcourue par un courant d'intensité 1 produit par un générateur 11.

Le courant a une forme d'onde en dents de scie et une intensité maximale suffisamment élevée pour dépasser le champ coercitif du produit de façon significative et éventuellement atteindre la saturation magnétique.

Des courants de Foucault sont engendrés dans le produit au moyen d'une bobine émettrice 20 disposée à proximité de la surface du produit, entre les pôles de l'électroaimant 12. La bobine émettrice est alimentée par trois circuits générateurs 14, 16, 18 fournissant des courants aux fréquences $f_B$, $f_H$ et $f_C$. Les courants fournis par les générateurs 14, 16 sont de fréquences fixes par exemple respectivement égales à 200 Hz et 20 kHz, tandis que celui fourni par le générateur 18 est de fréquence ajustable.

Une bobine détectrice 22, par exemple concentrique avec la bobine émettrice 20, fournit une tension représentative de l'amplitude des courants de Foucault. Cette tension est appliquée à une entrée d'un circuit amplificateur différentiel 26 qui reçoit sur une autre entrée une tension fournie par une bobine de référence 24 située à proximité de la surface du produit, à l'extérieur de la zone d'action de la bobine émettrice 20.

Le signal différentiel issu du circuit 26 est appliqué en parallèle à trois circuits de détection. Le premier comprend un filtre sélectif passe-bande 30 centré sur la fréquence basse $f_B$, en série avec un circuit 32 redresseur double alternance, un circuit 34 de détection d'enveloppe et un amplificateur opérationnel 36 qui délivre un signal analogique représentatif de la composante $S_B$ à la fréquence $f_B$ dans le signal de détection des courants de Foucault. Le deuxième circuit de détection comprend un filtre sélectif passe-bande 40 centré sur la fréquence haute $f_H$, en série avec un circuit 42 redresseur double alternance, un circuit 44 de détection d'enveloppe et un amplificateur opérationnel 46 qui délivre un signal analogique représentatif de la composante $S_H$ à la fréquence $f_H$ dans le signal de détection des courants de Foucault. Le troisième circuit de détection comprend un filtre sélectif passe-bande 50 centré sur la fréquence critique $f_C$, en série avec un circuit 52 redresseur double alternance, un circuit 54 de détection d'enveloppe et un amplificateur opérationnel 56 qui délivre un signal analogique représentatif de la composante $S_C$ à la fréquence $f_C$ dans le signal de détection des courants de Foucault. La fréquence centrale du filtre 50 est réglable simultanément avec la fréquence du générateur 18. Les signaux de sortie des amplificateurs 36, 46, 56 sont appliqués à un module de conversion analogique-numérique constitué par exemple de trois convertisseurs analogiques-numériques 38, 48 et 58 et les informations numériques fournies par ceux-ci sont reçues par une unité de traitement numérique 60.

Les opérations effectuées par l'unité de traitement 60 sont indiquées sur la figure 6.

Un cycle d'acquisition des grandeurs $S_B$, $S_H$ et $S_C$ est déclenché au passage par le maximum $I_{max}$ du courant alimentant la bobine de l'électroaimant 12. L'intensité I de ce courant est utilisée comme grandeur par rapport à laquelle la fonction de perméabilité incrémentale est déterminée, plutôt que l'intensité H du champ magnétique produit par l'électroaimant 12. En effet, I est plus facilement mesurable que H et les deux grandeurs varient ensemble de façon univoque. Pour chaque valeur échantillonnée du courant I, les valeurs numériques correspondantes des grandeurs $S_B$, $S_H$ et $S_C$ sont mémorisées dans l'unité de traitement 60. A titre d'exemple, la fréquence F du champ magnétique est de 0,1 Hz, de sorte qu'un cycle d'acquisition dure 10 s.

Les valeurs $I_{OB}$, $I_{OH}$ et $I_{OC}$ (correspondant à $H_{OB}$, $H_{OH}$ et $H_{OC}$), pour un extremum des dérivées des fonctions de perméabilité incrémentale qui traduisent les variations de $S_B$, $S_H$ et $S_C$ en fonction de I, sont ensuite déterminées. L'extremum est le minimum de la dérivée pour la fraction de la fonction décrite lorsque I croît ou le maximum de la dérivée pour la fraction de la fonction décrite lorsque I décroît. Si les valeurs de I pour ce minimum et ce maximum sont respectivement $I_O$ et $I'_O$, on pourra donc choisir soit $I_O$, soit $I'_O$, soit la moyenne arithmétique entre les valeurs absolues de $I_O$ et $I'_O$. Les valeurs $I_{OB}$, $I_{OH}$ et $I_{OC}$ sont déterminées après lissage des fonctions $S_B$, $S_H$ et $S_C$, dérivée de celles-ci, lissage des dérivées et recherche des extremums des dérivées.

Des tests préliminaires sur $I_{OB}$ et $I_{OH}$ sont effectués en comparant $I_{OB}$ à une valeur de référence $I_{OBm}$ (correspondant à $H_{OBm}$) et $I_{OH}$ à une valeur de référence $I_{OHM}$ (correspondant à $H_{OHM}$). On notera que pour les fréquences $f_B$ et $f_H$ citées plus haut à titre d'exemple, c'est-à-dire 200 Hz et 20 kHz, les cas extrêmes éliminés lors des tests préliminaires correspondent à des valeurs typiques de profondeur de décarburation respectivement égales à plus de 500 μm et moins de 80 μm. Si $I_{OB} < I_{OBm}$, le produit est considéré comme mauvais, tandis que, si $I_{OH} > I_{OHM}$, le produit est considéré comme bon.

Ensuite, le paramètre

$$ Q = \frac{I_{OC} - I_{OH}}{I_{OB} - I_{OH}} $$

est comparé aux valeurs de seuil $Q_f$ et $Q_p$. Si $Q \leq Q_f$, le produit est considéré comme mauvais, tandis que si $Q \geq Q_p$, le produit est considéré comme bon. Dans le cas où $Q_f < Q < Q_p$, le produit est

qualifié de douteux. L'information qualitative relative au produit peut être sous forme lumineuse, une lampe rouge, verte ou orange étant allumée sous la commande de l'unité de traitement selon que le produit est mauvais, bon ou douteux.

Bien que l'on ait envisagé ci-avant le cas où les courants de Foucault aux trois fréquences $f_B$, $f_H$ et $f_C$ sont simultanément engendrés, il est possible d'effectuer les explorations aux fréquences $f_B$, $f_H$ et $f_C$ de façon successive, et non simultanée.

En outre, comme déjà indiqué, il pourra suffire, dans certains cas, d'effectuer une comparaison entre la valeur $I_{OC}$ obtenue lors de l'exploration à fréquence critique $f_C$ avec la valeur $I_{OH}$ obtenue lors d'une exploration à fréquence haute ou la valeur $I_{OB}$ obtenue lors d'une exploration à fréquence basse.

La qualification du produit comme bon, mauvais et éventuellement, douteux, est alors fonction de l'écart entre $I_{OC}$ et $I_{OH}$ ou $I_{OB}$. En particulier, une comparaison avec $I_{OH}$ pourra s'avérer suffisante dans le cas de décarburation profonde.

Enfin, également comme déjà indiqué, l'invention est utilisable d'une façon plus générale, pour le contrôle de tout matériau magnétique, non nécessairement un acier, qui présente un gradient de structure superficielle, c'est-à-dire une structure proche de la surface différente de celle à coeur.

**Revendications**

1. Procédé de contrôle non destructif de produit en matériau magnétique présentant un gradient de structure dans sa partie superficielle, en utilisant la technique de la perméabilité incrémentale, procédé selon lequel :
- des courants de Foucault sont engendrés dans le produit à contrôler tout en faisant varier périodiquement l'intensité d'un champ magnétique extérieur appliqué au produit à contrôler, la fréquence de variation de l'intensité du champ magnétique étant petite par rapport à la fréquence des courants de Foucault, et
- la valeur de l'intensité du champ magnétique correspondant sensiblement à un extremum de la dérivée de la fonction de perméabilité incrémentale par rapport au champ magnétique, ou une grandeur équivalente, est déterminée,
- la fonction de perméabilité incrémentale traduisant la relation entre un signal fourni par des moyens de détection des courants de Foucault, ou une grandeur équivalente à ce signal, et l'intensité du champ magnétique, ou une grandeur équivalente à cette intensité, et
- l'extremum de la dérivée par rapport au champ magnétique de la fonction de perméabilité incrémentale étant le minimum de cette dérivée pour la partie de la fonction dont la courbe représentative est décrite pour les valeurs croissantes de l'intensité du champ magnétique, ou le maximum de cette dérivée pour la partie de la fonction dont la courbe représentative est décrite pour les valeurs décroissantes de l'intensité du champ magnétique, procédé caractérisé en ce que :

(a) les valeurs ($I_{OH}$, $I_{OB}$, $I_{OC}$) de l'intensité du champ magnétique, ou d'une grandeur équivalente, correspondant audit extremum de la dérivée de la fonction de perméabilité incrémentale, sont déterminées pour au moins deux fréquences différentes des courants de Foucault engendrés dans le produit :

- au moins l'une des deux fréquences constituées par une fréquence ($f_H$) relativement haute pour que les courants de Foucault soient essentiellement localisés à proximité de la surface du produit, dans une zone où le produit présente normalement une première structure, et une fréquence ($f_B$) relativement basse pour que les courants de Foucault atteignent une zone relativement profonde où le produit présente normalement une deuxième structure différente de la première, et,

- une deuxième fréquence, ou fréquence critique ($f_C$), prédéterminée en fonction d'une valeur critique choisie de la profondeur de transition entre la première et la deuxième structure ; et

(b) au moins une information qualitative relative au produit contrôlé est émise en fonction de la valeur d'intensité ($I_{OC}$) déterminée pour la fréquence critique par rapport à la ou chaque valeur d'intensité ($I_{OH}$, $I_{OB}$) déterminée pour au moins l'une des fréquences haute et basse.

2. Procédé selon la revendication 1, caractérisé en ce que les valeurs ($I_{OH}$, $I_{OB}$) de l'intensité du champ magnétique, ou d'une grandeur équivalente, correspondant à l'extremum de la dérivée de la fonction de perméabilité incrémentale sont déterminées pour la fréquence haute et pour la fréquence basse et une information qualitative relative au produit controlé est émise en fonction de la position de la valeur d'intensité ($I_{OC}$) déterminée pour la fréquence critique dans l'intervalle délimité par les valeurs d'intensité ($I_{OH}$, $I_{OB}$) déterminées pour les fréquences haute et basse.

3. Procédé selon la revendication 2, caractérisé en ce qu'une information indiquant que le produit est bon est émise lorsque la valeur d'intensité ($I_{OC}$) déterminée pour la fréquence critique est comprise dans une première partie dudit intervalle du côté de l'une des valeurs d'intensité ($I_{OB}$, $I_{OH}$) déterminées pour les fréquences basse et haute.

4. Procédé selon la revendication 2, caractérisé en ce qu'une information indiquant que le produit est mauvais est émise lorsque la valeur d'intensité ($I_{OC}$) déterminée pour la fréquence critique est comprise dans une deuxième partie dudit intervalle située du côté de l'une des valeurs d'intensité ($I_{OB}$, $I_{OH}$) déterminées pour les fréquences basse et haute.

5. Procédé selon la revendication 2, caractérisé en ce qu'une information indiquant que le produit est bon est émise lorsque la valeur d'intensité ($I_{OC}$) déterminée pour la fréquence critique est comprise dans une première partie dudit intervalle située du côté de l'une des valeurs d'intensité ($I_{OB}$, $I_{OH}$) déterminées pour les fréquences basse et haute, une information indiquant que le produit est mauvais est émise lorsque la valeur ($I_{OC}$) déterminée pour la fréquence critique est comprise dans une deuxième partie dudit intervalle située du côté de l'autre des valeurs d'intensité ($I_{OB}$, $I_{OH}$) déterminées pour les fréquences basse et haute, et une information indiquant que le produit est douteux est émise lorsque la valeur d'intensité ($I_{OC}$) déterminée pour la fréquence critique est comprise dans la partie centrale restante dudit intervalle.

6. Procédé selon l'une quelconque des revendications 2 à 5, caractérisé en ce que la valeur d'intensité ($I_{OH}$) déterminée pour la fréquence haute est comparée à une première valeur de référence ($I_{OHM}$) pour détecter la présence éventuelle de la deuxième structure dans la zone où sont essentiellement localisés les courants de Foucault engendrés à la fréquence haute.

7. Procédé selon l'une quelconque des revendications 2 à 6, caractérisé en ce que la valeur d'intensité ($I_{OB}$) déterminée pour la fréquence basse est comparée à une deuxième valeur de référence ($I_{OBm}$) pour détecter la présence éventuelle de la première structure dans la zone atteinte par les courants de Foucault engendrés à la fréquence basse.

8. Procédé selon l'une quelconque des revendications 2 à 7, caractérisé en ce que les courants de Foucault aux fréquences respectivement basse, haute et critique sont engendrés simultanément, et le signal fourni par les moyens de détection des courants de Foucault, ou la grandeur équivalente à ce signal, est filtré sélectivement pour en restituer les composantes aux dites fréquences basse, haute et critique.

9. Utilisation du procédé selon l'une quelconque des revendications 2 à 8 pour le contrôle non destructif de la décarburation superficielle d'un produit en acier.

10. Dispositif de contrôle non destructif d'un produit en un matériau magnétique présentant un gradient de structure dans sa partie superficielle, dispositif comprenant :

- des premiers moyens d'excitation (14, 16, 18, 20) pour engendrer des courants de Foucault dans le produit à contrôler,

- des deuxièmes moyens d'excitation (11, 12) pour appliquer au produit à contrôler un champ magnétique extérieur dont l'intensité varie périodiquement avec une fréquence petite par rapport à la fréquence des courants de Foucault,

- des moyens (22) de détection des courants de Foucault engendrés dans le produit, et

- une unité de traitement (60) reliée aux moyens de détection des courants de Foucault pour déterminer la valeur de l'intensité du champ magnétique, ou d'une grandeur équivalente, correspondant sensiblement à un extremum de la dérivée de la fonction de perméabilité incrémentale par rapport au champ magnétique,

- la fonction de perméabilité incrémentale traduisant la relation entre un signal fourni par les moyens de détection des courants de Foucault, ou une grandeur équivalente à ce signal, et l'intensité du champ magnétique, ou une grandeur équivalente à cette intensité, et

- l'extremum de la dérivée par rapport au champ magnétique de la fonction de permeabilité incrémentale étant le minimum de cette dérivée pour la partie de la fonction dont la courbe représentative est décrite pour les valeurs croissantes de l'intensité du champ magnétique, ou le maximum de cette dérivée pour la partie de la fonction dont la courbe représentative est décrite pour les valeurs décroissantes de l'intensité du champ magnétique, dispositif caractérisé en ce que :

(a) les premiers moyens d'excitation (14, 16, 18, 20) sont agencés pour engendrer des courants de Foucault à au moins deux fréquences différentes :

- une première fréquence choisie parmi une fréquence ($f_B$) relativement basse pour que les courants de Foucault atteignent une zone relativement profonde où le produit présente une première structure, ou une fréquence ($f_H$) relativement haute pour que les courants de Foucault soient essentiellement localisés à proximité de la surface du produit dans une zone où le produit présente normalement une deuxième structure différente de la première, et

- une deuxième fréquence, ou fréquence critique ($f_C$), prédéterminée en fonction d'une valeur critique choisie de la profondeur de transition choisie entre la première et la deuxième structure ; et

(b) l'unité de traitement (60) est agencée pour déterminer les valeurs ($I_{OB}$ ou $I_{OH}$, $I_{OC}$) de l'intensité du champ magnétique, ou d'une grande équivalente, correspondant audit extremum de la dérivée de la fonction de perméabilité incrémentale, pour au moins les deux fréquences différentes des courants de Foucault engendrés dans le produit ; et

(c) l'unité de traitement (60) comprend des moyens pour émettre au moins une information qualitative relative au produit contrôlé, en fonction de la position de la valeur d'intensité ($I_{OC}$) déterminée pour la fréquence critique par rapport à la ou à chaque valeur d'intensité ($I_{OB}$, $I_{OH}$) déterminée pour au moins l'une des fréquences basse et haute.

11. Dispositif de contrôle non destructif selon la revendication 10, caractérisé en ce que l'unité de traitement (60) est agencée pour déterminer les valeurs ($I_{OB}$, $I_{OB}$, $I_{OC}$) de l'intensité du champ magnétique, ou d'une grandeur équivalente, correspondant audit extremum de la dérivée de la fonction de perméabilité incrémentale, pour les fréquences respectivement basse, haute et critique, des courants de Foucault engendrés dans le produit ; et en ce que l'unité de traitement (60) comprend des moyens pour émettre au moins une information qualitative relative au produit contrôlé, en fonction de la valeur d'intensité ($I_{OC}$) déterminée pour la fréquence critique dans l'intervalle délimité par les valeurs d'intensité ($I_{OH}$, $I_{OB}$) déterminées respectivement pour les fréquences haute et basse.

12. Dispositif selon la revendication 13, caractérisé en ce que l'unité de traitement comprend des moyens pour calculer le rapport (Q) entre l'écart séparant la valeur d'intensité ($I_{OC}$) déterminée pour la fréquence critique de l'une des valeurs d'intensité ($I_{OB}$, $I_{OH}$) déterminées pour les fréquences basse et haute, et l'écart séparant les valeurs d'intensité ($I_{OB}$, $I_{OH}$) déterminées pour les fréquences basse et haute, et des moyens pour comparer le rapport calculé avec au moins une valeur de seuil prédéterminée afin d'émettre l'information qualitative relative au produit en fonction du résultat de la ou des comparaisons.

13. Dispositif selon l'une quelconque des revendications 11 et 12, caractérisé en ce qu'il comprend des moyens pour comparer les valeurs d'intensité ($I_{OB}$, $I_{OH}$) déterminées pour les fréquences basse et haute avec des valeurs de référence respectives prédéterminées ($I_{OBm}$, $I_{OHM}$) pour détecter la présence éventuelle de la deuxième structure dans une zone où le produit présente normalement la première structure et pour détecter la présence éventuelle de la première structure dans une zone où le produit présente normalement la deuxième structure.

14. Dispositif selon l'une quelconque des revendications 11 à 13, caractérisé en ce que les premiers moyens d'excitation comportent un circuit générateur (14, 16, 18) produisant des signaux aux fréquences basse, haute et critique, et une bobine émettrice (20) disposée à proximité de la surface du produit à un emplacement où celui-ci est soumis au champ magnétique d'intensité variable engendré par les deuxièmes moyens d'excitation ; et les moyens de détection comportent une bobine détectrice (22) située à proximité de la surface du produit au regard de la zone de celui-ci parcourue par les courants de Foucault engendrés au moyen de la bobine émettrice, une bobine de référence (24) située à proximité de la surface du produit au regard d'une zone de celui-ci non parcourue par les courants de Foucault, et un circuit relié à la bobine détectrice et à la bobine de référence pour fournir, pour chaque fréquence ($f_B$, $f_H$, $f_C$) des courants de Foucault, un signal ($S_B$, $S_H$, $S_C$) représentant la différence entre la tension aux bornes de la bobine détectrice et la tension aux bornes de la bobine de référence.

15. Dispositif selon l'une quelconque des revendications 11 à 14, caractérisé en ce qu'il comprend des moyens pour ajuster la valeur de la fréquence critique ($f_C$).

16. Dispositif selon l'une quelconque des revendications 11 à 15, caractérisé en ce qu'il est destiné au contrôle non destructif de la décarburation superficielle d'un produit en acier.

Fig-1

Fig-2

Fig-3

Fig-4

Fig-5

Fig-6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 049 951 (EXXON) <br> * Page 7, ligne 7 - page 11, ligne 13; page 15, ligne 20 - page 22, ligne 6; résumé; figures 3-5,9 * <br> --- | 1,10 | G 01 N 27/72 <br> G 01 N 27/80 |
| A | EP-A-0 023 456 (COMMISSARIAT A L'ENERGIE ATOMIQUE) <br> * Page 4, ligne 23 - page 6, ligne 12; résumé; figures 1,2 * <br> --- | 1,10 | |
| A | EP-A-0 296 417 (INSTITUT DR. FRIEDRICH FÖRSTER) <br> * Colonne 5, ligne 33 - colonne 6, ligne 46; résumé; figure 4 * <br> --- | 1,10 | |
| A | FR-A-2 105 110 (COMMISSARIAT A L'ENERGIE ATOMIQUE) <br> * Page 3, ligne 36 - page 6, ligne 17; figures 1,2 * <br> --- | 1,10 | |
| A | US-A-2 992 390 (L. DE WHITE) <br> * Colonne 6, ligne 56 - colonne 8, ligne 46; figures 4,5 * <br> ----- | 1,10 | **DOMAINES TECHNIQUES RECHERCHES (Int. Cl.5)** <br><br> G 01 N <br> G 01 R |

Le présent rapport a été établi pour toutes les revendications

| Lieu de la recherche | Date d'achèvement de la recherche | Examinateur |
|---|---|---|
| LA HAYE | 16-07-1990 | BOSMA R.A.P. |

EPO FORM 1503 03.82 (P0402)